(19) **Europäisches Patentamt**

**European Patent Office**

**Office européen des brevets**

(11) Veröffentlichungsnummer: **0 345 476**
**A2**

(12) **EUROPÄISCHE PATENTANMELDUNG**

(21) Anmeldenummer: **89108391.7**

(22) Anmeldetag: **10.05.89**

(51) Int. Cl.⁴: **B23D 47/00**

(30) Priorität: **07.06.88 DE 3819291**

(43) Veröffentlichungstag der Anmeldung:
**13.12.89 Patentblatt 89/50**

(84) Benannte Vertragsstaaten:
**AT BE CH DE ES FR GB GR IT LI LU NL SE**

(71) Anmelder: **Jägers, Leopold**
**Billigerstrasse 125**
**D-5350 Euskirchen(DE)**

(72) Erfinder: **Jägers, Leopold**
**Billigerstrasse 125**
**D-5350 Euskirchen(DE)**

(74) Vertreter: **Patentanwaltsbüro Cohausz & Florack**
**Schumannstrasse 97**
**D-4000 Düsseldorf 1(DE)**

(54) **Maschine zum Kaltsägen von Werkstücken.**

(57) Die Erfindung betrifft eine Maschine zum Kaltsägen von Werkstücken mit einem angetriebenen Kreissägeblatt, das an seiner Rückseite mit seinem mittigen Bereich auf einer insbesondere flanschförmigen Lagerfläche der Antriebsachse aufliegt und das nahe der Schneidstelle durch an beiden Seitenflächen anliegende Gleitbacken geführt ist, wobei die auf der Rückseite des Sägeblattes 1 anliegenden erste(n) Gleitbacken 17, 25 unnachgiebig befestigt sind und in der Ebene der Lagerfläche 4 liegt bzw. liegen, und daß die der erste(n) Gleitbacke(n) 17, 25 gegenüberliegende, auf der Blattvorderseite anliegende(n) zweite(n) Gleitbacke(n) 18, 24 ohne Druck am Sägeblatt 1 anliegen und in ihrem Abstand zu der (den) ersten Gleitbacke(n) 17, 25 verstellbar sind.

Fig.1

## Maschine zum Kaltsägen von Werkstücken

Die Erfindung betrifft eine Maschine zum Kaltsägen von Werkstücken mit einem angetriebenen Kreissägeblatt, das an seiner Rückseite mit seinem mittigen Bereich auf einer insbesondere flanschförmigen Lagerfläche der Antriebsachse aufliegt und das nahe der Schneidstelle durch an beiden Seitenflächen anliegende Gleitbacken geführt ist.

Bei solchen Metallsägen ist es wichtig, daß während des Schneidens von Platten oder Profilen, insbesondere bei Längsschnitten das Sägeblatt seitlich nicht verläuft. Hierzu ist es insbesondere aus dem US-Patent 3383968 bekannt in der Nähe der Schneidstelle des Sägeblattes zu beiden Seiten Gleitbacken zum Führen anzuordnen. Diese Gleitbacken liegen unter Druck an den Seitenflächen des Sägeblattes an und müssen von Zeit zu Zeit nachgestellt bzw. ausgetauscht werden, da sie einem Verschleiß unterliegen. Es muß ständig kontrolliert werden, wieweit der Verschleiß fortgeschritten ist, da aufgrund des Verschleißes das Sägeblatt nicht mehr in der exakten Richtung schneidet, sondern von den verschlissenen Führungsbacken in eine abweichende Richtung gelenkt wird.

Aufgabe der Erfindung ist es, eine Maschine der eingangs genannten Art so zu vebessern, daß eine optimale Führung des Kreissägeblattes durch die Gleitbacken auf lange Zeit erreicht wird und ein Verschleiß an den Gleitbacken nicht stattfindet und damit ein Nachstellen der Gleitbacken sich erübrigt.

Diese Aufgabe wird erfindungsgemäß dadurch gelöst, daß die auf der Rückseite des Sägeblattes anliegenden erste(n) Gleitbacke(n) unnachgiebig befestigt sind und in der Ebene der Lagerfläche liegt bzw. liegen, und daß die der erste(n) Gleitbacke(n) gegenüberliegende, auf der Blattvorderseite anliegende(n) zweite(n) Gleitbacke(n) ohne Druck am Sägeblatt anliegen und in ihrem Abstand zu der (den) ersten Gleitbacke(n) verstellbar sind.

Wird ein Kreissägeblatt in dieser Weise ohne Druck und sehr exakt zwischen den Gleitbacken geführt, so unterliegen die Gleitbacken keinem Verschleiß und es können über lange Zeit sehr exakte Schnitte durchgeführt werden. Insbesondere dann, wenn die Gleitbacken mit ihren Anlageflächen groß genug gewählt sind, findet praktisch kein Verschleiß statt, da aufgrund des nicht vorhandenen Druckes und des verwendeten Schmiermittels eine genügend große Fläche mit einem Schmierfilm versorgt ist, der von dem verhältnismäßig leichten Anpreßdruck eines zum Verlaufen neigenden Sägeblattes nicht unterbrochen wird. Das Sägeblatt ist damit auf Lebensdauer der Maschine bzw. des Sägeblattes exakt geführt und geschmiert.

Wie wichtig es ist, eine einwandfreie Führung zu gewährleisten, wird daran deutlich, daß heute auf hochmodernen Präzisionssägen Schnitte von z. B. Stützträgern für Hochbauten oder Brücken durchgeführt werden, ohne Nachbearbeitung der Stöße zu erfordern.

Diese Stützträger erreichen oft Abmessungen von 500 x 1000 mm mit einem Materialgewicht von über 1000 Kg pro laufenden Meter. Ebenso werden heute auf diesen Präzisionssägen automatisch geschweißte Träger und andere Profile bis zu einer Größe von 500 x 2500 mm, welche auf wechselnder Lastaufnahme (Druck und Zug) zusammengefügt werden müssen, exakt das heißt ohne Nachbearbeitung gesägt. Bis vor wenigen Jahren war es notwendig, diese Stöße auf sogenannten Kopf-Fräsen nachzuarbeiten, was nicht nur sehr teuer war, sondern auch jedesmal einen neuen Messvorgang einleitete und hierdurch sehr aufwendig wurde. Ebenso ist es beim Sägen von Grobblechen bzw. legierten Stahlplatten, die z. B. zur Herstellung von Vorrichtungen-Werkzeugen und Maschinenteilen usw. Verwendung finden. Würde man z. B. eine Stahlplatte 9000 mm Länge und 100 mm Stärke ohne seitliche Führungen des Sägeblattes zu sägen versuchen, so würde es nur als Zufall zu bezeichnen sein, auch nur einen Schnitt ohne Verlaufen des Sägeblattes durchzuführen. Heute werden aber mit entsprechenden hochpräzisen Langschnittsägen für Plattenmaterial diese Schnitte mit einer Toleranz von +- 0,2 mm gemacht, so daß sich in den meisten Fällen eine mechanische Nacharbeit erübrigt.

Ein sicherer Halt und ein exaktes und leichtes Einstellen wird dann erreicht, wenn die zweite(n) Gleitbacke(n) von einem Stützteil getragen ist (sind), das durch mindestens zwei voneinander entfernte Befestigungsstellen gestützt ist, die in ihrer Lage verstellbar sind. Hierbei kann das Stützteil ein waagerechtes Profil, insbesondere ein Balken sein, an dessen freien Ende oberhalb und unterhalb je eine zweite Gleitbacke, insbesondere über ein nach oben und ein nach unten vorstehendes Halteteil befestigt ist.

Besonders vorteilhaft ist es, wenn das Stützteil bzw. das Profil mit einer waagerechten Nut auf Stiften beweglich gelagert ist, die an den Befestigungsstellen vorstehen, und daß das Stützteil durch eine Klemmvorrichtung gegen die Befestigungsstellen gedrückt ist. Auch ist es konstruktiv besonders einfach, wenn die Befestigungsstellen von Schrauben gebildet sind, an deren Köpfen das Stützteil aufliegt und die durch Drehen verstellbar und durch eine Mutter festlegbar sind. Ferner ist es besonders vorteilhaft, wenn die ersten Gleitbacken rechtwinklig zur Sägeblattebene verstellbar sind.

Ein Ausführungsbeispiel der Erfindung ist in den Zeichnungen dargestellt und wird im Folgenden näher beschrieben. Es zeigen:

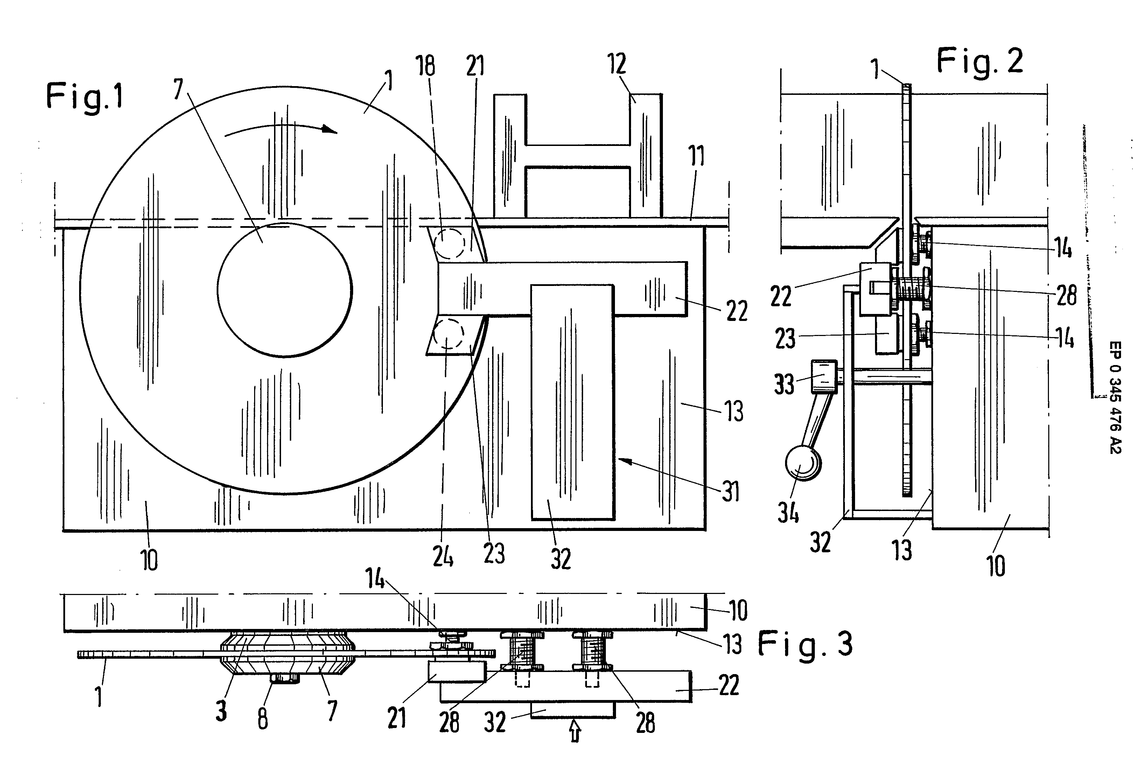

Figur 1 eine Vorderansicht des Getriebes einer Kreissägemaschine mit Flansch und Sägeblatt und aufgesetztem äußeren Stabilisator;

Figur 2 eine Seitenansicht eines Teiles des Getriebes mit dem inneren und äußeren Flansch, dem Sägeblatt und dem Stabilisator mit der Befestigung;

Figur 3 eine Draufsicht wie vor;

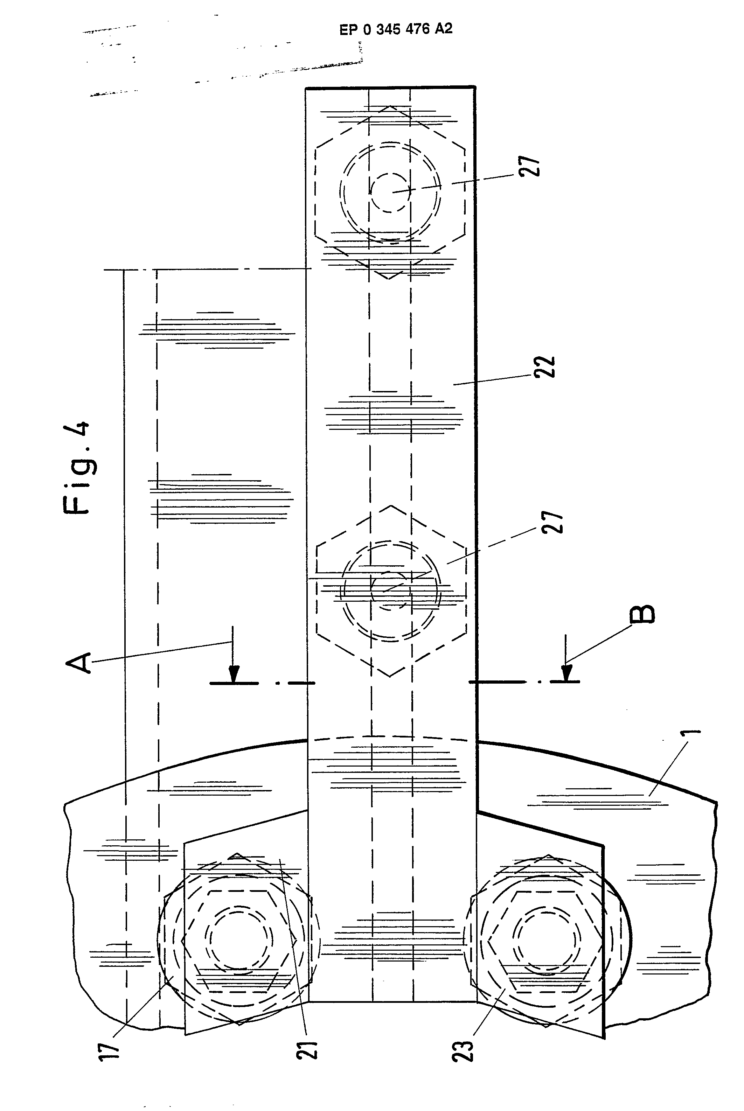

Figur 4 eine Vorderansicht eines Teiles des Sägeblattes und des Getriebes mit dem aufgesetzten äußeren Stabilisator;

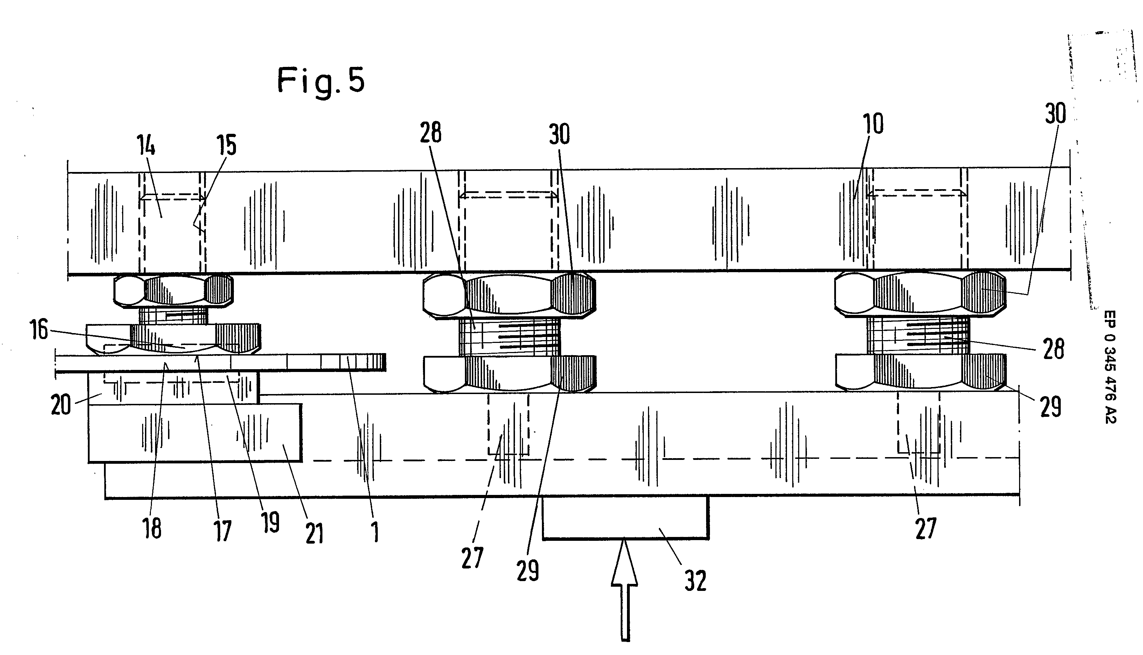

Figur 5 eine Draufsicht eines Teiles des Getriebes und des Sägeblattes mit den einstellbaren inneren Stabilisatoren, dem äußeren Stabilisator, mit der Einstellung und der Befestigung;

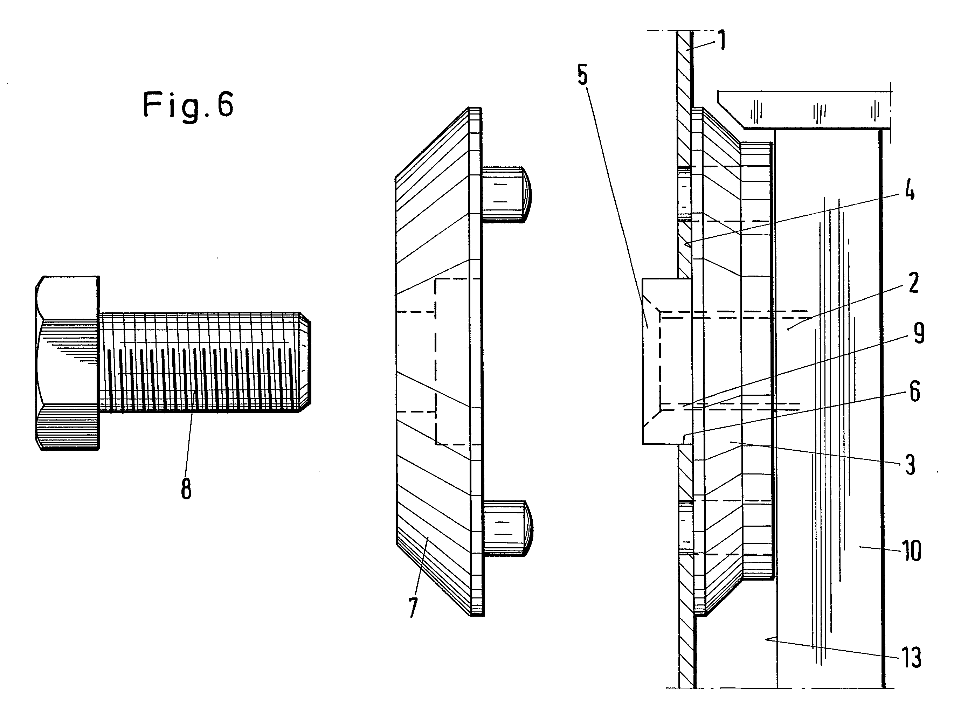

Figur 6 eine Seitenansicht des inneren Flansches mit der Sägeblattaufnahme und dem Sägeblatt, dem äußeren Flansch mit den Mitnehmerstiften und der Befestigungsschraube;

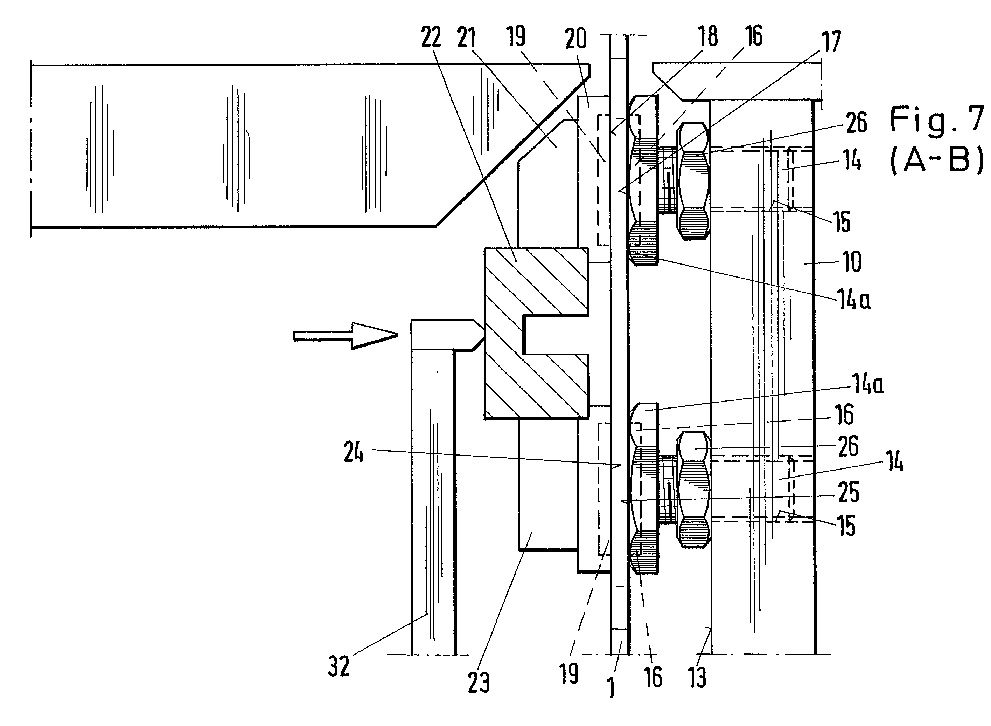

Figur 7 eine Seitenansicht von der Figur 4 im Schnitt, mit einem Teil des Sägeblattes, dem inneren Stabilisator und einem Teil des äußeren Stabilisators mit der Befestigung.

Ein Sägeblatt 1 ist auf einer Antriebsachse 2 auswechselbar befestigt. Hierzu trägt die Antriebsachse 2 einen Flansch 3, dessen vorderen Lagerfläche 4 das Sägeblatt 1 angelegt wird, wobei ein koaxialer Dorn 5 die Mittenöffnung 6 des Sägeblattes durchdringt. Nach Auflegen des Sägeblattes wird ein teller- oder flanschförmiges Teil 7 aufgesetzt und durch eine Schraube 8 befestigt, die in eine Bohrung 9 des Dornes 5 eingeschraubt wird.

Die Antriebsachse 2 tritt waagerecht aus einem Getriebegehäuse 10 aus, über dem eine Arbeitsplatte 11 liegt, die von dem oberen Bereich des Sägeblattes 1 überragt wird und auf der die Werkstücke 12 verschoben werden, um gesägt zu werden.

An der vorderen senkrechten Seitenfläche 13 des Gehäuses 10 sind waagerecht zwei Schrauben 14 senkrecht übereinander im Abstand in Gewindebohrungen 15 eingeschraubt. In den senkrechten und zur Fläche 13 als auch zu den Seitenflächen des Sägeblattes 1 parallelen Vorderflächen der Schraubenköpfe 14a der Schrauben 14 sind Hartmetallplättchen 16 eingelassen, die dazu parallele Gleitbacken 17 bilden. Die an der hinteren Seitenfläche 1a des Sägeblattes 1 anliegende Fläche der Gleitbacke 17 liegt exakt in derselben Ebene wie die Lagerfläche 4.

Mit der Gleitbacke 17 fluchtend liegt auf der gegenüberliegenden Seite des Sägeblattes 1 an der vorderen Seitenfläche 1b eine vordere Gleitbacke 18 an, die wiederum von einem Hartmetallplättchen 19 gebildet wird, das in einem Aufnahmeteil 20 einliegt. Das Aufnahmeteil ist mit seiner dem Sägeblatt 1 abgewandten Seite an einem oberen Halteteil 21 befestigt, das wiederum an der Oberseite eines Stützteiles 22 in Form eines waagerechten Balkens befestigt ist. In gleicher Weise wie die obere Gleitbacke 18 ist über ein unteres Halteteil 22 ein unteres Aufnahmeteil 23 mit einem Hartmetallplättchen 19 unterhalb der Gleitbacke 18 befestigt, so daß dort eine unter Gleitbacke 24 besteht, der eine untere Schraube 14 gegenüberliegt, die wiederum ein Hartmetallplättchen als Gleitteil trägt. Somit ist das Sägeblatt in der Nähe des Schnittbereiches mit seiner Rückseite durch zwei übereinander angeordnete erste Gleitbacken 17, 25 und auf der Vorderseite mit diesen fluchtenden zweiten Gleitbacken 18, 24 gestützt. In Größe und Konstruktion sind die beiden hinteren als auch die beiden vorderen Gleitbacken zueinander identisch. Die Schrauben 14 der hinteren Gleitbacken können so genau drehverstellt werden, daß die Kontaktfläche der Hartmetallplättchen 16 exakt in der Ebene der Lagerfläche 4 liegen und danach werden die Schrauben 14 durch Muttern 26 festgestellt.

Das Stützteil 22 in Form eines waagerechten Balkens oder Profils mit dem Ausführungsbeispiel rechteckförmigen Querschnitts, größere Höhe als Breite weist an seiner Rückseite eine waagerechte und zur Fläche 13 rechtwinklige Nut auf, in die gewindelose Stifte 27 hineinreichen, die koaxial von den Köpfen zweier in gleicher Höhe angeordneter Schrauben 28 abstehen. Die Schraubenköpfe 29 sind durch Verdrehen der Schrauben 28 in ihrem Abstand zur Fläche 13 exakt einstellbar und durch Muttern 30 feststellbar, so daß das an den Köpfen 29 lose anliegende Stützteil 22 so genau ausgerichtet werden kann, daß die Gleitbacken 18, 24 so exakt an die vordere Fläche des Sägeblattes 1 angelegt werden können, daß auf das Sägeblatt kein Druck ausgeübt wird, obwohl die Kontaktflächen der Gleitbacken 18, 24 die Seitenfläche des Sägeblattes 1 berühren.

An der Vorderseite des Stützteils 22 liegt ein Stabilisator 31 in Form eines senkrechten Halteteils bzw. einer Klemmvorrichtung 32 an, wobei dieses Teil 32 von einer senkrechten länglichen Platte gebildet wird, deren oberes Ende an der Außenseite des Stützteils 22 anliegt und durch die eine Schraube 33 mit Griff 34 verläuft, die in die Seitenfläche 13 eingeschraubt ist und durch den Griff 34 genau von Hand in ihrer Position verstellt werden kann. Der von der Schraube 33 auf das Stützteil 22 ausgeübte Druck wird von den Schrauben 28 abgefangen, so daß dieser Druck nicht auf die Gleitbacken 18, 24 übertragen wird.

**Ansprüche**

1. Maschine zum Kaltsägen von Werkstücken mit einem angetriebenen Kreissägeblatt, das an seiner Rückseite mit seinem mittigen Bereich auf einer insbesondere flanschförmigen Lagerfläche der Antriebsachse aufliegt und das nahe der Schneidstelle durch an beiden Seitenflächen anliegende Gleitbacken geführt ist, **dadurch gekennzeichnet,** daß die auf der Rückseite des Sägeblattes (1) anliegenden erste(n) Gleitbacken (17, 25) unnachgiebig befestigt sind und in der Ebene der Lagerfläche (4) liegt bzw. liegen, und daß die der erste(n) Gleitbacke(n) (17, 25) gegenüberliegende, auf der Blattvorderseite anliegende(n) zweite(n) Gleitbacke (n) (18, 24) ohne Druck am Sägeblatt (1) anliegen und in ihrem Abstand zu der (den) ersten Gleitbacke(n) (17, 25) verstellbar sind.

2. Maschine nach Anspruch 1, **dadurch gekennzeichnet,** daß die zweite(n) Gleitbacke(n) (18, 24) von einem Stützteil (22) getragen ist (sind), das durch mindestens zwei voneinander entfernte Befestigungsstellen (28) gestützt ist, die in ihrer Lage axial verstellbar sind.

3. Maschine nach Anspruch 2, **dadurch gekennzeichnet,** daß das Stützteil (22) ein waagerechtes Profil, insbesondere ein Balken ist, an dessen freien Ende oberhalb und unterhalb je eine zweite Gleitbacke (18, 24), insbesondere über ein nach oben und ein nach unten vorstehendes Halteteil (21, 22) befestigt ist.

4. Maschine nach Anspruch 2 oder 3, **dadurch gekennzeichnet,** daß das Stützteil (22) bzw. das Profil mit einer waagerechten Nut (35) auf Stiften (27) beweglich gelagert ist, die an den Befestigungsstellen (28) vorstehen, und daß das Stützteil (22) durch eine Klemmvorrichtung (32) gegen die Befestigungsstellen (28) gedrückt ist.

5. Maschine nach einem der Ansprüche 2 bis 4, **dadurch gekennzeichnet,** daß die Befestigungsstellen (28) von Schrauben gebildet sind, an deren Köpfen (29) das Stützteil (22) aufliegt und die durch Drehen verstellbar und durch eine Mutter (30) festlegbar sind.

6. Maschine nach einem der vorherigen Ansprüche, **dadurch gekennzeichnet,** daß die ersten Gleitbacken (17, 25) rechtwinklig zur Sägeblattebene verstellbar sind.

Fig.1

Fig.2

Fig.3

Fig. 4

17

21

23

A

27

22

27

B

1

EP 0 345 476 A2

Fig. 5

EP 0 345 476 A2

Fig.6

EP 0 345 476 A2

Fig. 7 (A-B)